# EUROPEAN PATENT APPLICATION

(11) **EP 1 400 600 A1**
(43) Date of publication of application: **24.03.2004**
(21) Application number: 03103421.8
(22) Date of filing: 17.09.2003
(51) Int. Cl.: C12Q 1/68

(54) **Integrated device for biological analyses**

(30) Priority: 17.09.2002 IT TO20020808
(71) Applicant: STMicroelectronics S.r.l., 20041 Agrate Brianza (Milano) (IT)
(72) Inventor: SCURATI, Mario, 20100, Milano (IT); MASTROMATTEO, Ubaldo, 20010, Bareggio (IT); PALMIERI, Michele, 20041, Agrate Brianza (IT)
(74) Representative: Boggio, Luigi

(57) **Abstract**

An integrated device for nucleic acid analysis having a support (10) and a first tank (8) for introducing a raw biological specimen includes at least one pre -treatment channel (17), a buried amplification chamber (21), and a detection chamber (24) carried by the support (10) and in fluid connection with one another and with the tank (8). The device can be used for all types of biological analyses.

## Description

The present invention relates to an integrated device for biological analyses, such as nucleic acid analyses.

Typical procedures for analyzing biological materials, such as nucleic acid, protein, lipid, carbohydrate, and other biological molecules, involve a variety of operations starting from raw material. These operations may include various degrees of cell separation or purification, cell lysis, amplification or purification, and analysis of the resulting amplifi cation or purification product.

As an example, in DNA-based blood analyses samples are often purified by filtration, centrifugation or by electrophoresis so as to eliminate all the non -nucleated cells, which are generally not useful for DNA analysis. Then , the remaining white blood cells are broken up or lysed using chemical, thermal or biochemical means in order to liberate the DNA to be analyzed. Next, the DNA is denatured by thermal, biochemical or chemical processes and amplified by an amplification re action, such as PCR (polymerase chain reaction), LCR (ligase chain reaction), SDA (strand displacement amplification), TMA (transcription -mediated amplification), RCA (rolling circle amplification), and the like. The amplification step allows the operator to avoid purification of the DNA being studied because the amplified product greatly exceeds the starting DNA in the sample.

If RNA is to be analyzed the procedures are similar, but more emphasis is placed on purification or other means to protect the lab ile RNA molecule. RNA is usually copied into DNA (cDNA) and then the analysis proceeds as described for DNA.

Finally, the amplification product undergoes some type of analysis, usually based on sequence or size or some combination thereof. In an analysis by hybridization, for example, the amplified DNA is passed over a plurality of detectors made up of individual oligonucleotide detector fragments that are anchored, for example, on electrodes. If the amplified DNA strands are complementary to the oligonucl eotide detectors or probes, stable bonds will be formed between them (hybridization). The hybridized detectors can be read by observation by a wide variety of means, including optical, electromagnetic, electromechanical or thermal means (see e.g., US565393 9, US5846708, US5965452, US6258606, US6197503, US6448064, US6325977, US62073769, US6140045, US6066448, US5532128, US5670322, US5891630, US5858666, US6060023, US6203981, US6399303, US6287776, US6338968, US6340568, US6368795, US6376258, US6485905, US6167748, US6123819, US6325904, US6403317, and all patents and applications related thereto).

Other biological molecules are analyzed in a similar way, but typically molecule purification is substituted for amplification and detection methods vary according to the molecule being detected. For example, a common diagnostic involves the detection of a specific protein by binding to its antibody. Such analysis requires various degrees of cell separation, lysis, purification and product analysis by antibody binding, whi ch itself can be detected in a number of ways. Lipids, carbohydrates, drugs and small molecules from biological fluids are processed in similar ways. However, we have simplified the discussion herein by focusing on nucleic acid analysis, in particular DNA analysis, as an example of a biological molecule that can be analyzed using the devices of the invention.

The steps of nucleic acid analysis described above are currently performed using different devices, each of which presides over one part of the proce ss. In other words, known equipment for nucleic acid analysis comprises a number of devices that are separate from one another so that the specimen must be transferred from one device to another once a given process step is concluded.

The use of separate devices increases cost and decreases the efficiency of sample processing because it is necessary to add dead time for transferring the specimen from one device to another. Further, qualified operators are now required because the handling of the specimens calls for a high degree of specialization due to possible contamination problems. For these reasons an integrated device would be preferred.

Further, the use of large amounts of specimen fluid is also disadvantageous due to increased reagent costs and inc reased thermal cycling time. Therefore, in addition to using an integrated device, it would be advantageous to process small quantities of sample.

Several devices that perform biological analyses have been proposed (see e.g, US6303343, US6524830, US6306590 , US20020055149, 5304487, US5427946, US5498392, US5635358, US5726026, 5928880, US 5955029, US6184029, US6210882, US6413766, US20010029036, US6132580, US6284525, US6261431, US5639423, US5646039, US5674742, US6576549, US6180372, US6428987, US20010000752, US5939312, US6057149, US6271021, US20010046703, US6379929, US20020168671, US20020172969, US20010046701, US2003008286, US20030129646, US5942443, US6046056, US6267858, US6251343, US6488897, US20020127149, US6167910, US6321791, US6494230, US20020023684, US5856174, US5922591, US6168948, US6197595, US6326211, US20010036672, US20020022261, US6595232, US6454945, US20020100714, US20030026740 and all patents and applications related thereto) but the devices do not employ truly monolithic structures (e.g., having buried channels or chambers), and thus are more costly to make, more fragile and subject to clogging with glue when the caps are added or when two layers are sandwiched together.

Further, most devices are not truly integrated. In such cases, it is necessary to provide removable microfluid connections between the different devices, as well as an external micropump for moving the specimen fluid between devices.

The use of separate devices and removable microfluid connections involves, however, certain drawbacks. Micropump and microfluid connections are difficult to make and frequently leak. In particular, membrane -type micropumps and their valves are commonly used, but are affected by poor tightness. Consequently, it is necessary to process a conspicuous amount of specimen fluid because a non -negligible fraction is lost to leakage. Other types of pumps, such as servo -assisted piston pumps or manually operated pumps, present better qualities of tightness, but currently are not integratable on a micrometric scale.

The aim of the present invention is to provide an integrated micro -device for bio-analysis that is free from the drawbacks described above.

According to the present invention, an integrated device for nucleic acid analysis is provided, as defined in claim 1.

For a better understanding of the present invention, there are now described some embodiments thereof, purely by way of non -limiting example, and with reference to the attached drawings, wherein:
- Figure 1 is a three -quarter top perspective view of an integrated device according to a first embodiment of the invention;
- Figure 2 is a top plan view of the device of Figure 1;
- Figure 3 is a cross -section through the device of Figure 1, taken according to line III-III of Figure 2;
- Figure 4 is a top plan view of the device of Figure 1, sectioned along line IV - IV of Figure 3;
- Figure 5 is a enlarged scale view of a detail of Figure 3;
- Figure 6 is a bottom view of the detail illustrated in Figure 5, sectioned along line VI-VI of Figure 5;
- Figure 7 is a simplified circuit diagram of the device of Figure 1;
- Figure 8 is a top plan view of an integrated device according to a second embodiment of the present invention;
- Figure 9 is a cross -section of the device of Figure 8, taken according to line IX - IX of Figure 8;
- Figures 10 to 13 are cross -sections through a semiconductor wafer in successive steps of a process for manufacturing a first part of the device according to the present invention;
- Figures 14 to 21 are cross -sections through a semiconductor wafer in successive steps of a process for manufacturing a second part of the device according to the present invention; and
- Figure 22 is a comparison of a thermal profile of a PCR mixture in a typical plastic tube, and the thermal profile under the sam e cycling conditions of a prototypic silicon channel.

The device can be applied to the analysis of any biological molecule or biological reaction, including nucleic acid such as DNA, RNA or synthetic derivatives such as PNA (peptide nucleic acid), or othe r synthetic derivatives. Further, by substituting the amplification channels for reaction or purification channels and modifying the detection means, the device can be used with proteins by, for example, antibody detection.

As used herein "integrated devi ce" is defined as a single device wherein all sample processing and analysis steps can be performed without physical intervention by an operator, other than electronic control or programming of the analysis.

As used herein "buried channel" is defined as a channel or chamber that is buried inside of a single monolithic support, as opposed to a channel or chamber that is made by welding or otherwise bonding two supports with a channel or two half channels together.

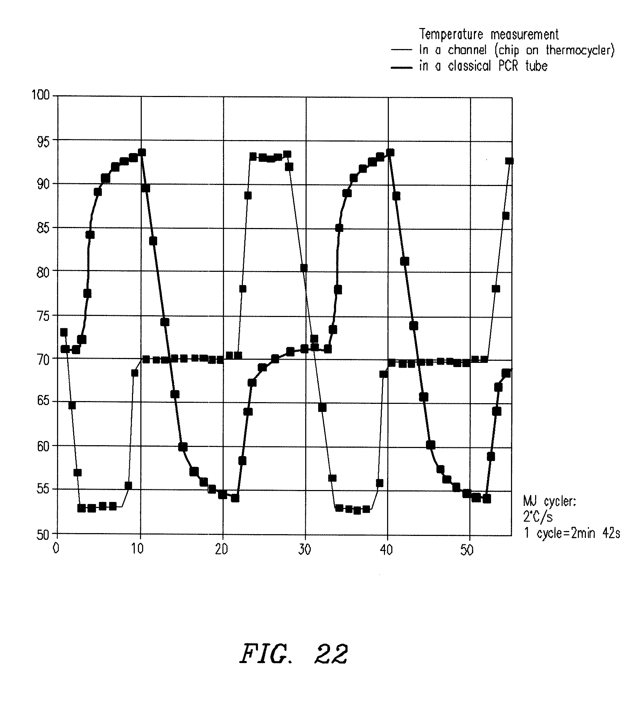

"High thermal conductivity" as used herein means a material that provides for very efficient heat transfer, so as to obtain the capacity for thermal cycles with nearly perfect linear profiles, as shown in Figure 22. As an example of a material with high thermal conductivity, we have used silicon, but other materials such as gallium nitride (GaN), other Group III-V and Group II-VI semiconductor substrates, ceramics, and the like may be used.

In one embodiment, the invention is an integrated micro -device for analysis of a biological specimen, compri sing a support having a first tank accessible from outside said support (e.g., an inlet port), a buried channel formed inside a monolithic support, and a detection chamber; each fluidly coupled to the other. The device may also have an integrated micropump on said support for moving a sample fluid through the microreactor. The micropump may be truly monolithic or may be welded to the support. Heaters and sensors may also be provided, and in a preferred embodiment are also integral to the support. However, t he micropump, heaters and sensors may also be provided externally (e.g., not on or in said support). Ideally, the support is a material with high thermal conductivity, such as silicon, allowing for excellent thermal response.

In another embodiment, the in vention is an integrated device for analysis of nucleic acid, having a support carrying at least one tank for introducing a biological specimen into said support, at least one pre -treatment channel, at least one buried channel inside said support, and at least one detection chamber, each being in fluid connection with each other. Additional tanks, channels and chambers may be added (or subtracted) as required for the application, and mixing chambers can be formed by the intersection of two channels. Where heaters and/or sensors are integrated into the device, the support is operably mounted on a printed -circuit board, and software and control elements are included. The device may also contain a micropump, preferably an integrated micropump.

In another embodi ment, the inventions are methods of manufacturing or using such devices. A complete portable device, including the various supports described herein (which can be disposable) and having a suitable user interface are also invented.

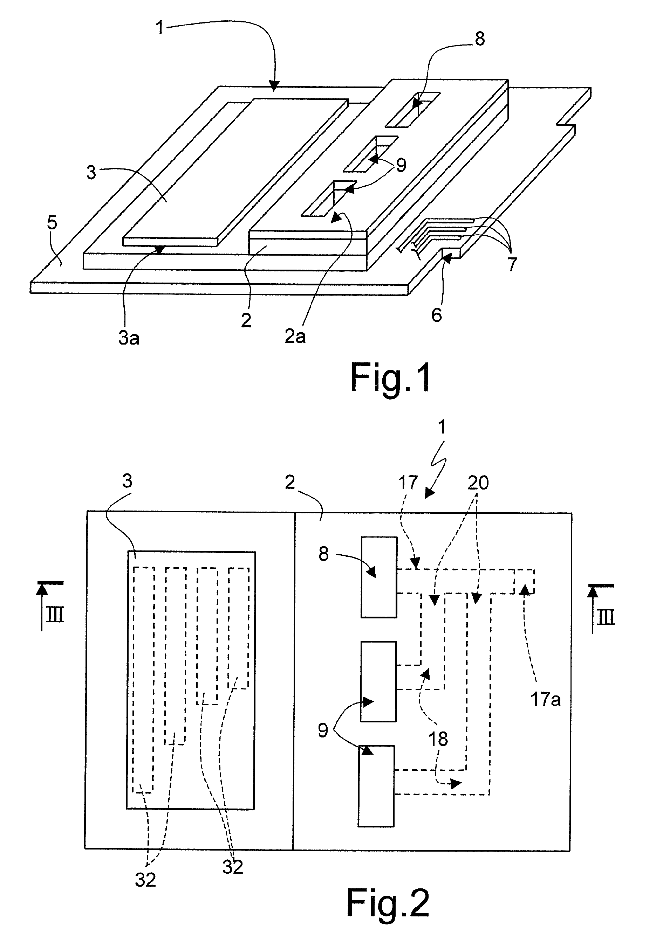

As illustrated in Figure 1, an integrated device for DNA analysis (Lab -On-Chip) designated, as a whole, by the reference number 1, comprises a microreactor 2 and a micropump 3. The microreactor 2 is carried on a printed -circuit board (PCB) 5 equipped with an interface 6 for conne ction to a driving and reading device (of a known type and not illustrated herein). In particular, input/output pins 7 of the microreactor 2 and of the micropump 3 are provided on the interface 6.

The microreactor 2 has a specimen tank 8 and a plurality of reagent tanks 9 (two, in the example illustrated), which are open on one face 2a opposite to the PCB base 5 and accessible from outside. The micropump 3 is hermetically seal -welded on the microreactor 2 (see also Figure 2).

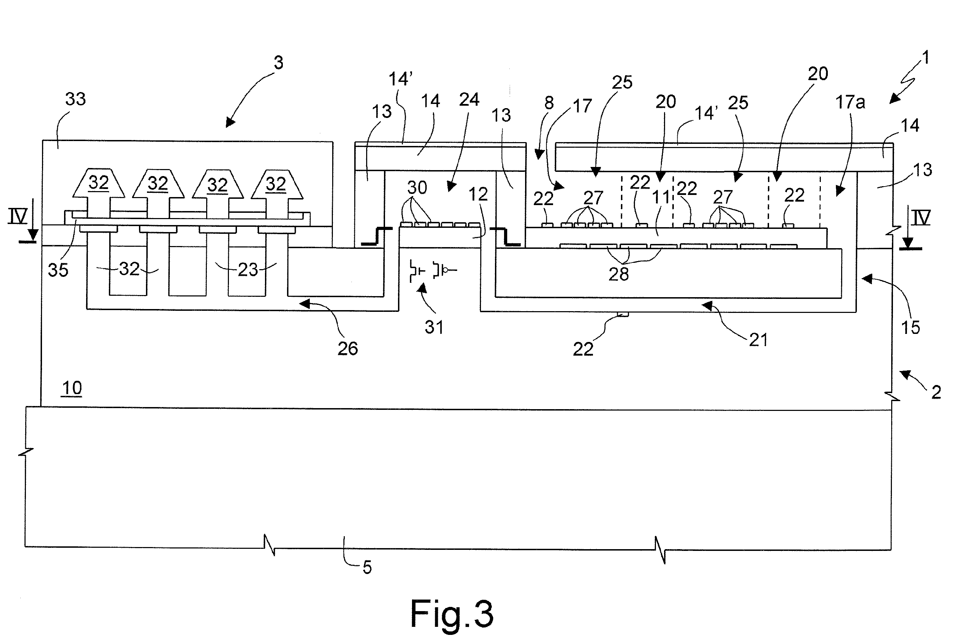

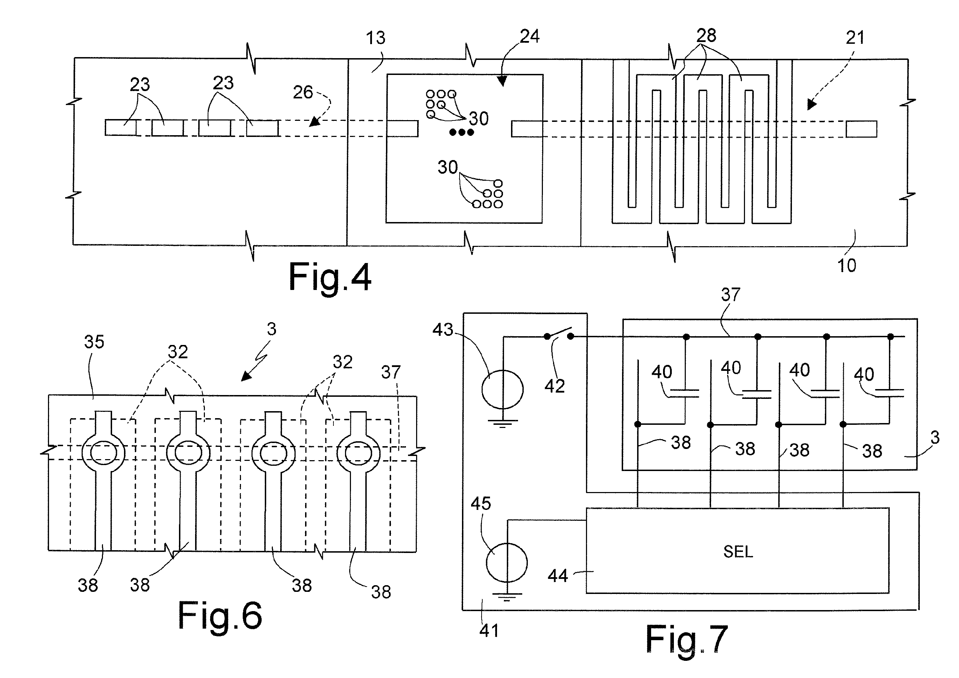

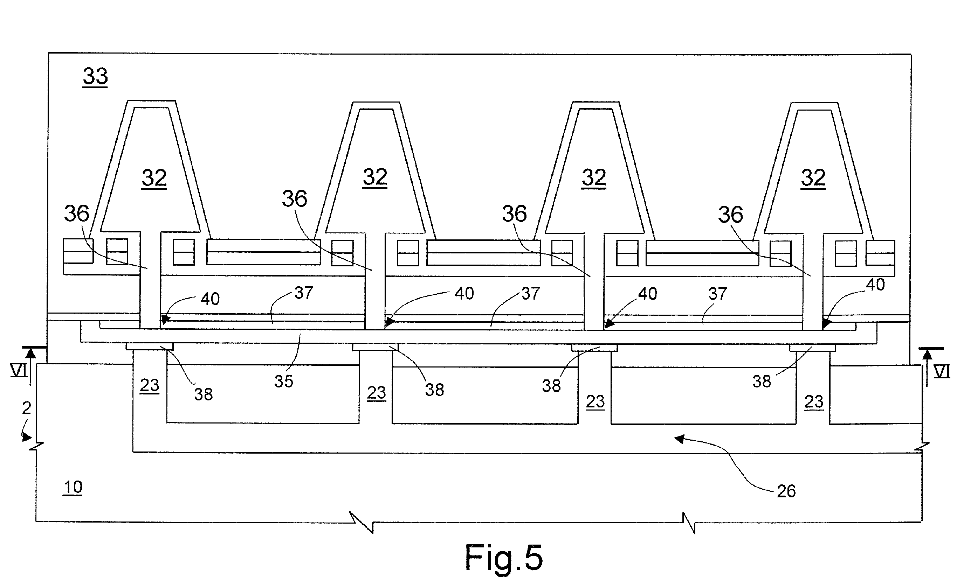

With reference to Figures 3 and 4, the microreactor 2 comprises a first body 10 of semiconductor material, for instance, monocrystalline silicon, and, on top thereof, a first and a second base 11, 12 of silicon dioxide, and a containment structure 13 of polymeric material, for example S U-8. In turn, the containment structure 13 is coated with a protective plate 14, which is open at the specimen tank 8 and the reagent tanks 9. The protective plate 14 is made using a transparent material coated with a conductive film 14', also transparent, for example, of indium-tin oxide ITO. Alternatively, the protective plate 14 is of conductive glass. A hydraulic circuit 15 is defined inside the containment structure 13 and the first body 10.

In greater detail, a pre-treatment channel 17, delimited laterally by the containment structure 13, at the top by the protective plate 14, and at the bottom by the first base 11, extends from the specimen tank 8, in the direction opposite to the micropump 3 substantially rectilinearly. Reagent channels 18 of preset length each connect a respective reagent tank 9 to the pre -treatment channel 17. Furthermore, at the outlet of the reagent channels 18, respective mixing chambers 20 are defined.

One end 17a of the pre-treatment channel 17, opposite to the specimen tank 8, is connected to an amplification channel 21, which is buried in the first body 10. In particular, the amplification channel 21 extends into the first body 10 underneath the pre-treatment channel 17 and ends into a detection chamber 24 formed in the containment structure 13 above the second base 12. A suction channel 26, which is also buried in the first body 10 and has an inlet into the detection chamber 24, extends underneath the micropump 3, and is connected to the latter via chimneys 23, as explained in greater detail hereinafter. In practice, the pre -treatment channel 17, the amplification channel 21, the detection chamber 24, and the suction channel 26 form a single duct through which a specimen of biological material is made to flow.

Stations for processing and analysis of the fluid are arranged along the pre -treatment channel 17 and the amplification channel 21; in proximity thereof sensors are provided for detecting the presence of fluid 22 and controlling advance of the specimen to be analyzed. In detail, two dielectrophoresis cells 25 are located in the pre -treatment channel 17 immediately downstream of the specimen tank 8 and, respectively, between the mixing chambers 20. The dielectrophoresis cells 25 comprise respective grids of electrodes 27 arranged above the first base 11 and forming electrostatic cages with respectively facing portions of the protective plate 14. The grid of electrodes 27 are electrically connected to a control device (of a known type and not illustrated) through connection lines (not illustrated either) and enable electric fields to be set up having an intensity and direction that are controllable inside the dielectrophoresis cells 25.

A heater 28 is arranged on the first body 10 above the amplification channel 21, is embedded in the first base 11 of silicon dioxide and enables heating of the amplification channel 21 for carrying out thermal PCR processes (see also Figure 4).

Located downstream of the amplification channel 21 is the detection chamber 24, which, as mentioned previously, is formed in the containment structure 13 and is delimited at the bottom by the second base 12 and at the top by the protective plate 14. An array of detectors 30, here of the cantilever type, is arranged on the second base 12 and can be read electronically. In addition, a CMOS sensor 31, associated to the detectors 30 and illustrated only schematically in Figure 3, is provided in the first body 10 underneath the detection chamber 24. In practice, then, a CMOS sensor 31 is connected directly to the detectors 30 without interposition of connection lines of any significant length.

The suction channel 26 extends from the detection chamber 24 underneath the micropump 3, and is connected top the latter by the chimneys 23.

The micropump 3, which for c onvenience is illustrated in Figure 3 in a simplified way, is shown in detail in Figure 5. The micropump 3 comprises a second body 33 of semiconductor material, for example silicon, accommodating a plurality of fluid -tight chambers 32. In greater detail, the fluid-tight chambers 32 have a prismatic shape, extend parallel to each other and to a face 34a of the second body 33, and have predetermined dimensions, as will be clarified hereinafter. In addition, the fluid -tight chambers 32 are sealed by a diaphrag m 35 of silicon dioxide, which closes respective inlets 36 of the fluid-tight chambers 32 so as to maintain a preset pressure value, considerably lower than atmospheric pressure (for example, 100 mtorr). Preferably, the diaphragm 35 has a thickness of not more than 1 µm.

As illustrated in Figures 3 and 5, the inlets 36 of the fluid -tight chambers 32 are aligned to respective chimneys 23 so as to be set in fluid connection with the suction channel 26 once the diaphragm 35 has been broken. Furthermore, since the micropump 3 is hermetically bonded to the microreactor 2, the fluid -tight chambers 32 can be connected with the outside world only through the duct formed by the suction channel 26, the amplification channel 21, the pre -treatment channel 17, and the reagent channels 18.

The micropump 3 is then provided with electrodes for opening the fluid -tight chambers 32. In particular, a first activation electrode 37 is embedded in the diaphragm 35 and extends in a transverse direction with respect to the fluid -tight chambers 32 near the inlets 36 (see also Figure 6). In greater detail, the first activation electrode 37 is perforated at the inlets 36 so as not to obstruct the latter. Second activation electrodes 38 are arranged on a face of the diaphragm 35 opposite to the first activation electrode 37 and extend substantially parallel to the fluid -tight chambers 32. In addition, each second electrode 38 is superimposed to a first electrode 37 at the inlet 36 of a respective fluid -tight chamber 32, thus forming a plur ality of capacitors 40 having respective portions of the diaphragm 35 as dielectric.

Figure 7 illustrates a simplified electrical diagram of the micropump 3 and of a control circuit 41. In practice, the first activation electrode 37 may be connected, via a switch 42, to a first voltage source 43, supplying a first voltage V1. Through a selector 44, the second activation electrodes 38 can be selectively connected to a second voltage source 45, which supplies a second voltage V2, preferably, of opposite sign to the first voltage V1. In this way, it is possible to select each time one of the capacitors 40 and to apply to its terminals a voltage equal to V1 - V2 higher than the breakdown voltage of the diaphragm 35, which functions as a dielectric. Consequently, the corresponding fluid-tight chamber 32 is selectively opened and set in fluid connection with the suction channel 26.

At the start of the DNA analysis process, a (fluid) specimen of raw biological material is introduced inside the specimen tank 8, while the reagent tanks 9 are filled with respective chemical species necessary for the preparation of the specimen, for instance, for subsequent steps of lysis of the nuclei. In this situation, the inflow of the air from the outside environment towards the ins ide of the pre-treatment channel 17, the reagent channels 18, and the amplification channel 21 is prevented.

Next, the micropump 3 is operated by breaking the portion of the diaphragm 35 that seals one of the fluid-tight chambers 32. In practice, by openin g the vacuum cell 32, a negative pressure is created and then, after the air present has been suctioned out, the specimen and the reagents previously introduced into the tanks 8, 9 are suctioned along the duct formed by the pre -treatment channel 17, the re agent channels 18, the amplification channel 21, the detection chamber 24, and the suction channel 26. The mass of fluid moved and the distance covered depend upon the pressure value present in the fluid-tight chamber 32 before opening and upon the dimensi ons of the fluid-tight chamber 32. In practice, the first vacuum cell 32 that is opened is sized so that the specimen will advance up to the dielectrophoresis cell 25 arranged at the inlet of the pre-treatment channel 17, and the reagents will advance by p reset distances along the respective reagent channels.

After a first dielectrophoretic treatment has been carried out, the other fluid -tight chambers 32 of the pump 3 are opened in succession at preset instants so as to cause the specimen to advance first along the pre-treatment channel 17 and then along the amplification channel 21 up to the detection chamber 24. In practice, therefore, the micropump 3 is used as a suction pump that can be operated according to discrete steps. The specimen, whose advance i s controlled also by the presence of sensors 22, is prepared in the pre-treatment channel 17 (separation of the reject material in the dielectrophoresis cells 25 and lysis of the cells and nuclei in the mixing chambers 20), and in the amplification channel 21, where a PCR treatment is carried out. Then, in the detection chamber 24, hybridization of the detectors 30 takes place, and the latter are then read by the CMOS sensor 31.

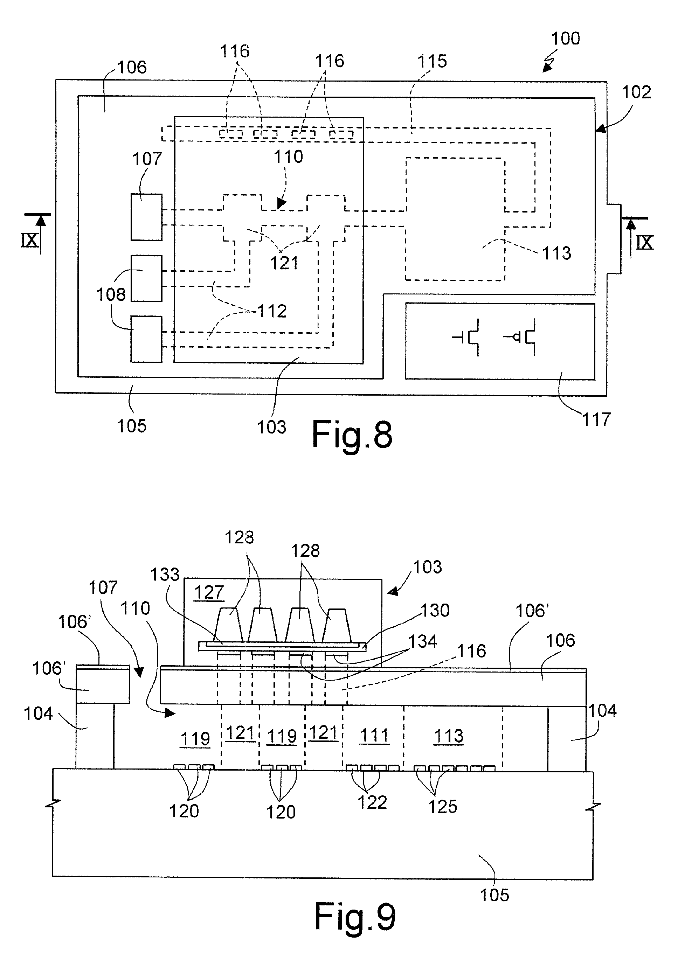

Figures 8 and 9 illustrate an integrated device 100 implemented according to a different embodiment of the invention and comprising a microreactor 102 and a micropump 103, which is similar to the micropump 3 of Figures 1 to 5. In this case, a containment structure 104 of plastic or other polymeric material is formed on a PCB 105, which functions as support and is coated with a protective plate 106 having a conductive film 106' on which the micropump 103 is welded. The microreactor 102 comprises: a specimen tank 107 and a reagent tanks 108; a pre -treatment channel 110, which extends from the specimen tank 107 and ends into an amplification chamber 111; reagent channels 112, which connect a respective reagent tank 108 to the pre - treatment channel 110; a detection chamber 113, arranged downstream of the amplification chamber 111; and a su ction channel 115, which extends from the detection chamber 113 and is connected to the micropump 103 through openings 116 formed in the protective plate 106. In addition, a read circuit 117 is carried on the PCB 105 outside the microreactor 102 in the pro ximity of the detection chamber 1.

Dielectrophoresis cells 119 are provided along the pre -treatment channel 110 and accommodate electrode grids 120, which form electrostatic cages with the protective plate 106, and mixing chambers 121 are provided at outle t of the reagent channels 108. In addition, a heater 122 is arranged inside the amplification chamber 113. Preferably, a heat sink 123 is connected to the PCB 105 at the heater 55.

The detection chamber 113 comprises an array of detectors 125 similar to th e ones already described, connected to the read circuit 117.

In the embodiment described, the electrode grids 120 of the dielectrophoresis cells 119, the heater 122, and the detectors 125 are directly printed on the PCB 105. The micropump 103 comprises a semiconductor body 127 accommodating fluid -tight chambers 128 sealed by a diaphragm 130 and having inlets 131 at respective openings 116 of the protective plate 106. The micropump 103 is then provided with a first activation electrode 133, embedded in the d iaphragm 130 and extending transversely to the fluid-tight chambers 128, near the inlets 131, and with second activation electrodes 134 arranged on one face of the diaphragm 130 opposite to the first activation electrode 133 and extending substantially par allel to the fluid-tight chambers 128. In addition, each of the second activation electrodes 134 is arranged above the first activation electrode 133 at the inlet 131 of a respective fluid -tight chamber 128.

The integrated device according to the invention has numerous advantages.

First, all the processing stations necessary for preparation and analysis of the specimen of biological material are made on a single support (i.e., the first body 10 and the PCB 105) and are in permanent fluid connection with on e another.

In particular, also the micropump is directly welded to the microreactor. Thereby, there is no more the need, at the moment of analysis, for connecting devices made on different supports by means of microfluid connections and for handling the specimen of biological material in intermediate steps of the process. Consequently, the leakage of specimen fluid, which afflicts traditional apparatus and which is normally due to imperfect fluid tightness and/or to evaporation, is eliminated. As a result, minimal amounts of raw biological material are sufficient, i.e., of the order of microlitres or even nanolitres. Clearly, the use of smaller amounts of specimen fluid affords an advantageous reduction both in costs and in treatment time (shorter thermal c ycles).

In addition, since the device according to the invention carries out preparation, analysis, and moving of the specimen fluid, it is possible to perform DNA analyses even outside of specialized environments or in the absence of qualified personnel. The device according to the invention may also be manufactured at a low cost and is therefore suitable for being used as a disposable product.

Particularly advantageous is the first embodiment (described with reference to Figures 1 to 6) for at least two reasons. On the one hand, in fact, in the amplification channel 21, the high thermal conductivity of silicon is exploited, which enables steep and precise temperature profiles to be imposed during the PCR process.

On the other hand, the CMOS sensor 31 ca n be provided in the immediate vicinity of the detectors 30, practically without using connection lines or by providing lines of negligible length. It is known that electronic reading of the hybridized detectors may be based upon different quantities; for example, it is possible to detect variations in capacitance, as in the example described, in impedance, or in other electrical quantities. In addition, reading can be carried out according to different modalities: continuous, dynamic, or by a sweep of vari able and controlled frequencies. In all cases, however, very small variations need to be detected. In order to reduce any possible causes of distortion to a minimum, it is therefore extremely important for the read circuit (the CMOS sensor, in the example described) to be as close as possible to the detectors.

On the other hand, the second embodiment of the invention described enables even simpler and more inexpensive integrated devices to be built.

Additional advantages derive from the use of the vacuum mi cropump. First, the micropump is welded in a hermetically sealed way to the microreactor and, consequently, is not subject to leakage. Furthermore, the micropump has no moving parts and does not interact directly with the specimen fluid, so preventing any possible chemical reactions. The micropump is then able to move the specimen fluid in a single direction without the aid of valves and to cause it to advance at each step by a preset distance.

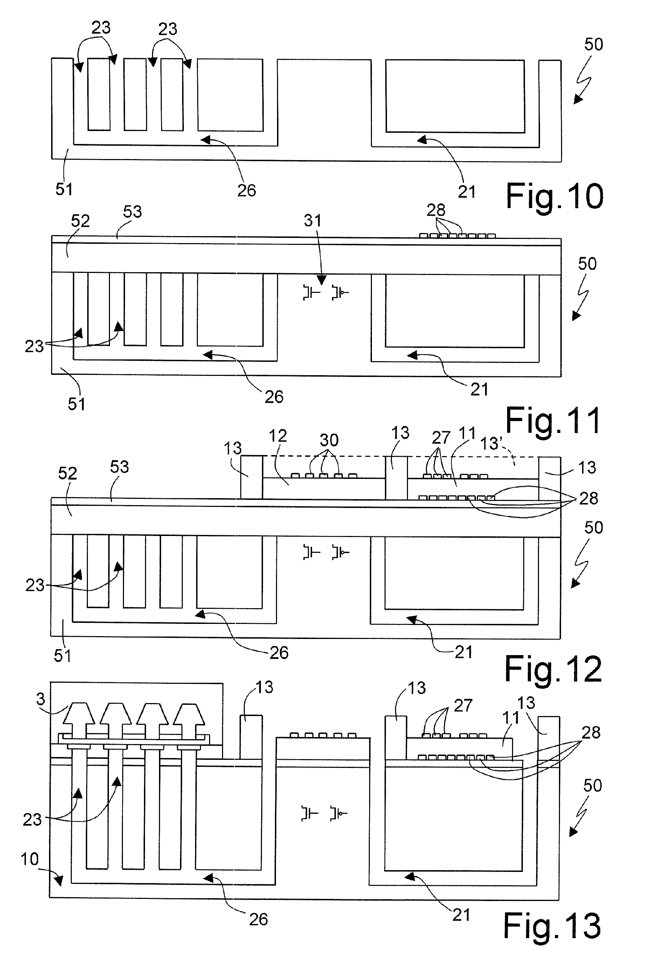

Both the microreactor 2 and the micropump 3 can then be impleme nted in a simple way. In particular, a process for manufacturing the microreactor 2 is illustrated hereinafter with reference to Figures 10 to 13.

Initially, Figure 10, the amplification channel 21, and the suction channel 26, buried in the substrate 51, and the chimneys 23 are formed. Next (see Figure 11), after depositing a polysilicon germ layer, not illustrated here, that is removed from the portion of the substrate 51 where electronic components are to be integrated, an epitaxial layer 52 is grown and oxidized on the surface. Then, the CMOS sensor 31 is formed in the monocrystalline portion of the wafer 50; a pad oxide layer 53 is formed, and the heater 28 is deposited thereon. The substrate 51 and the epitaxial layer 53 in practice form the supporting body 10 of the microreactor 2.

Next (see Figure 12), a thick layer of silicon dioxide is deposited and defined so as to form the first base 11 and the second base 12, on which the electrodes 27 and the detectors 30 are formed. The containment structure 13 is then formed and delimits the pre-treatment channel 17 and the detection chamber 24. In particular, in this step, a polymeric material layer 13', in this case SU -8, is deposited on the wafer 50 and then defined.

Then, the body 10 is etched to open up an access to the amplification channel 12 and to the chimneys 23, as illustrated in Figure 13.

After bonding of the micropump 3, the detectors 30 are functionalized, i.e., pre - selected segments of DNA or "probes", complementary to the nucleic acid to be analyzed, are anchored. Finally, the protective wafer 14 is bonded over the containment structure 13 and is selectively etched to open up the specimen tank 8 and the reagent tanks 9. Alternatively, the protective plate 14 may be made up of two parts, which are applied for closing the pre -treatment channel 17 and the detection chamber 24, respectively before and after functionalization of the detectors 30.

Thereby, the structure represented in Figure 3 is obtained. The method described enables convenient creation of channels on two different levels arranged one above the other (the pre-treatment channel 17, at the more external level, and the amplification channel 21 and the suction channel 26, at the more internal level). The structure thus obtained is compact an d of small size.

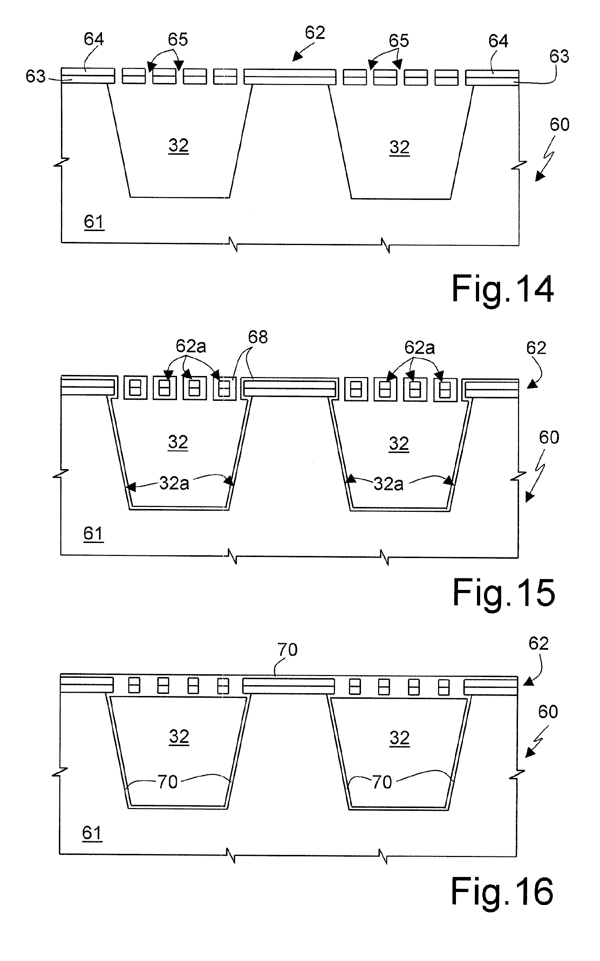

The micropump may, instead, be formed following the process illustrated hereinafter with reference to Figures 14 to 21.

According to figure 14, a hard mask 62, comprising a silicon dioxide layer 63 and a silicon nitride layer 64, is initially formed on a semiconductor wafer 60 having a substrate 61. The hard mask 62 has groups of slits 65, which are substantially rectilinear and are arranged parallel to one another. The substrate 61 is then etched using tetramethylammoniumhydroxide (TMA) an d the fluid-tight chambers 32 are dug through respective groups of slits 65.

Next (see Figure 15), a polysilicon layer 68 is deposited and coats the surface of the hard mask 62 and the walls 32a of the fluid -tight chambers 32. In addition, the polysilicon layer 68 incorporates portions 62a of the hard mask 62, suspended after formation of the fluid-tight chambers 32. The polysilicon layer 68 is then thermally oxidized (see Figure 16) so as to form a silicon dioxide layer 70, which grows also outwards and closes the slits 65.

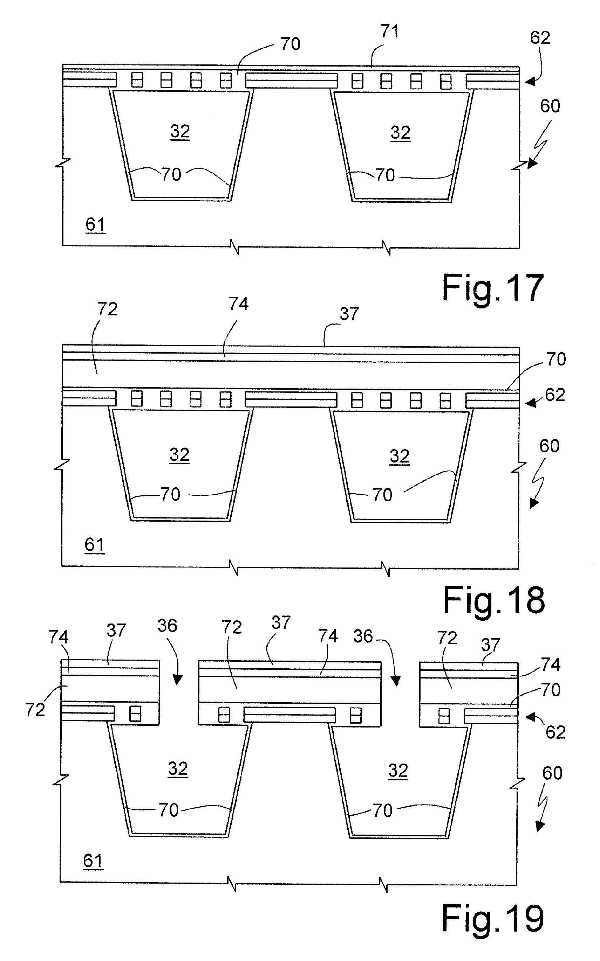

After depositing a germ layer 71 of polysilicon (see Figure 17), an epitaxial layer 72 is grown and thermally oxidized on the surface so as to form an insulating layer 74 (see Figure 18). An aluminum strip is then deposited on the insula ting layer 74 and forms the first activation electrode 37.

Then, an STS etch is performed. As illustrated in Figure 19, in this step the first activation electrode 37, the insulating layer 74, the epitaxial layer 72 and the hard mask 62 are perforated, and the inlets 36 of the fluid -tight chambers 32 are defined, thus opening again the fluid -tight chambers 32.

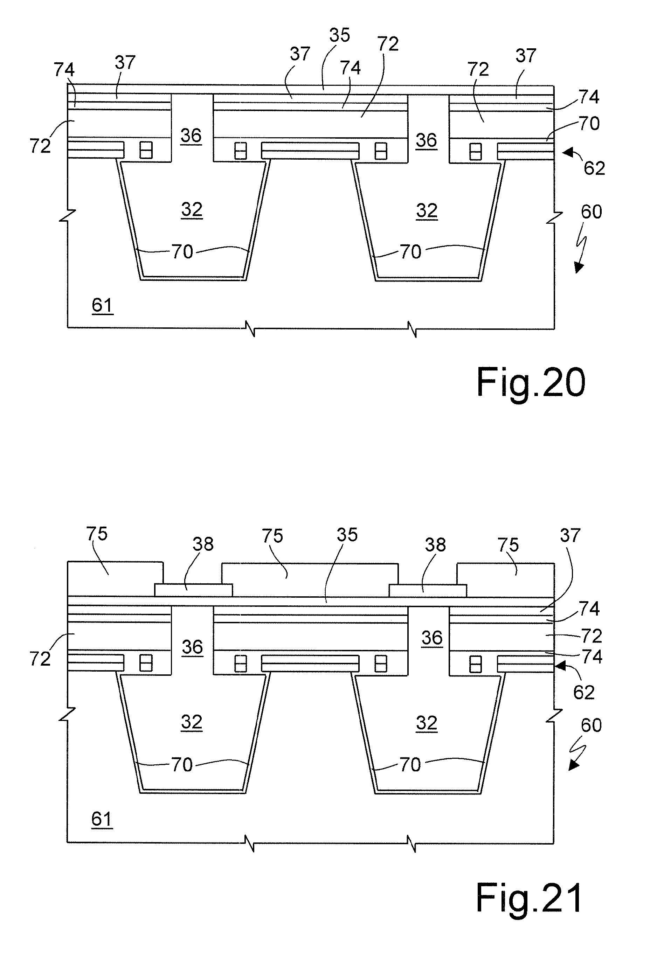

By depositing silicon dioxide at low pressure (for example, 100 mtorr), the diaphragm 35 is then formed, which incorporates the first activation elec trode 37 and seals the fluid-tight chambers 32 (see Figure 20). Consequently, the pressure imposed during deposition of the diaphragm 35 is maintained inside the fluid -tight chambers 32.

Next, by a new aluminum deposition, the second activation electrodes 38 are formed, and a protective resist layer 75 is then formed and open above the second activation electrodes 38 (see Figure 21).

Finally, the semiconductor wafer 60 is cut so as to obtain a plurality of dice, each containing a micropump 3, which is bonde d to a respective microreactor 2. Thereby, the structure illustrated in Figures 3 and 5 is obtained.

Finally, it is clear that modifications may be made to the integrated device described herein, without departing from the scope of the present invention, a s defined in the appended claims

For example, the microreactor may comprise a different number or order of dielectrophoresis cells, pre -treatment channels, chambers, reagent tanks, channels, and the like. In particular, the number and succession of electro des, chambers, channels and their connecting components depends upon the type of treatment to which the specimen fluid is to be subjected. Further, if the sample is premixed with all necessary reagents, the reagents tanks may be eliminated.

In addition, the microreactor may comprise more than one heater for carrying out different thermal treatment steps (for instance, thermal lysis of the cells, heat denaturation of proteins, and the like) and may also include one or more coolers (for rapid cooling between heating steps, which can shorten the cycle time, and/or protect delicate molecules from degradation).

Further, although we have described detectors based on hybridization to oligonucleotides, other detection means specific for the biological molecule bei ng analyzed are readily available and each detector technology would require corresponding changes in sensor technology. Also the CMOS sensor could be made in a different way (see e.g., US2002/097900). For example, it could be manufactured separately, on a dedicated semiconductor chip and then bonded on the body of the microreactor.

The micropump may comprise a different number of fluid -tight chambers according to the number of steps required by the treatment. The fluid -tight chambers may differ also as regards their shape, dimensions, and arrangement. In particular, the fluid -tight chambers may be arranged according to a matrix array. In this case, the micropump may comprise a plurality of first electrodes 37 (up to the number of rows of the matrix) and a row selector, similar to the selector illustrated in Figure 7 for selective connection of one of the first electrodes 37 to the first voltage source 43.

Also, instead of employing dielectrophoresis cells to separate nucleated and non - nucleated blood cells, the device may simply incorporate a chamber to lyse all cells by heat, enzymatic or chemical means. Cell debris can be collected on the chamber walls by charge interactions, may be retained by virtue of exits shaped to retain large debris while allowing small molecules to pass, or can be separated from the nucleic acid via travel through a separation matrix or porous membrane or by electrophoretic transport of the negatively charged nucleic acid.

Additionally, the microreactor may be coupled to a micropump based upon a different operating principle as compared to the one described herein, such as ferrofluidic magnetic micropumps, electrochemical micropumps, piezoelectric micropump, valve - less planar pumps, and the like.

Buried channel-based microreactors may be fabricated in a number of ways, in addition to that described herein (see e.g., EP -A-1043770, US6376291, EP -A-1123739, EP-A-1130631, EP-A-1161985, US20020045244, and US20030057199 and patents and applications related thereto).

A prototype silicon channel was made by bonding 2 etched silicon wafers to produce a 600 µm wide losange shaped channel. A thermocouple was inserted into the channel under oil and the chip placed on a thermo -cycler. Thermal profiles were compared with a regular plastic PCR tube in the same thermo-cycler as shown in Figure 22. The results confirm that a silicon substrate provides superior thermal performance due to its high thermal conductivity. This will allow the cycling times to be minimized for fastest performance.

A dummy chip (with no channels) having 18 heating elements and 4 sensors was packaged on an FR4 substrate and isothermy measured by infrared camera. Although the results were somewhat variable, an optimal isothermy of ± 0.3 was obtained.

Experiments will be performe d in buried channel prototypes complete with thermal resistors in order to determine the minimum cycle time. The preliminary experiments indicate that increased ramp rates, decreased cycle time and decreased denaturation temperatures are possible in the ch ip (as compared with tube PCR), due to its high thermal conductivity, small size and possibly also due to the surface passivation which may affect the Tm of the DNA molecules in the microenvironment.

A prototype device was manufactured, as described above , having 20 buried channels and 20 surface detection electrodes. Both PCR and detection were realized on the prototype chip.

A variety of channel cross sections were tested in prototype devices, and it was discovered that "V" shaped channels (formed by pu rsuing etching to completion) were superior to trapezoidal channels, in that the channel surfaces were smoother and there were fewer problems with filling, flow, bubbles and sample recovery. In one embodiment, the triangular channels were approximately 200 µm wide by 150 µm deep and contained a total volume of about 3 µ.

It was also discovered that naked silicon channels, although allowing amplification, produced low yields that could be improved by passivation of the channel surface or washing. Of the various passivation treatments employed, thermal deposition of SiO2 (1 µm) was preferred as least expensive, although other passivation treatments, including silanization and BSA coatings could be effective. Silanization, however, was not compatible with the MICAM process (below).

For the prototype, MICAM technology (see e.g, US6510237 and related patents and applications) was used to electronically address individual probe detector molecules to specific locations on the chip, although many other technologies are available. The electrodes employed a three layer metallization: Ti for adhesion, Ni as a diffusion barrier and gold for the copolymerization of the pyrrole -pyrrole-DNA probes. The process included Ti/Ni/Au sputtering, photolithography and a final wet etching. Photoresist was found to be compatible with the etching process and was chosen for the prototype wafers. Care should be taken not to overetch the metallic layers.

The DNA probes were sequentially deposited on the electrodes using pyrrole electropolymerzation at 1V/ECS for 1 second. Experiments with a fluorescent dye confirmed that the polymerization process did not clog the buried channels. Further, the MICAM electrodes were exposed to thermal cycling (30 cycles at 94°C) and were shown to be compatible with typical cycling conditions. The detectors were able to detect full length biotin-labeled PCR products prepared in a classical tube reaction by hybridization at 42°C for 1 hour and optical detection using phycoerythrin - streptavidin. The signals we re both strong and specific.

In the prototype model, the detection electrodes were superficial (e.g., on the surface rather than buried). Hence a cap or cover was employed to prevent contamination and evaporation, and it was discovered that a glass cover was not compatible with the MICAM technology. However, the difficulty could also be accommodated by employing a different detection methodology or by using substituting metals or by changing the thickness of the different metallization layers.

In this prototype, however, a plastic cover (1 mm polycarbonate) was used where applicable. Glues 5008 and 564A from ABLEFILM^{TM} were PCR compatible and were cured at 150°C or 175°C, respectively, for 2 hours. Care should be taken not to plug the channels during the capping process.

A test amplification was performed in the channels by filling the channels with PCR mix (target, primers, dNTPs, polymerase, Mg ⁺⁺, buffer and BSA) by capillary action, using a drop of oil to cover the inlet and outlet reservoirs. BSA or another anti - absorbant (such as PVP40, Tween20, gelatin, ac rylamide and the like) was found to be required for amplification in the chip environment, and this was believed to prevent adsorption of the enzyme to the surfaces. The chip itself was placed in a thermal - cycler in the preliminary experiments. The cycle p rofile was typical and products were analyzed by electrophoresis and EtBr stain. Successful amplifications were obtained.

The use of two thermal zones may be preferred for continuous PCR applications, wherein detection and amplification are to occur simul taneously at two different temperatures. However, in most amplification reactions the two processes occur sequentially and the use of trenches or heat sinks (such as a metal plate) between the thermal zones is not required.

For continuous PCR an additiona 1 prototype with two thermal zones was designed, whereby thermal isolation of the two zones was obtained by back etching and the addition of a heat sink. In the first prototype, the two heating zones were connected by superficial channels made with SU8 walls and a glass cap. Where back etching of trenches was used to create two thermal zones, simulations showed that each trench contributed to a 10°C difference in temperature between the two zones.

Test experiments were performed with fluorescent labeled cells to confirm that red and white blood cells could be separated and lysed in the microchip environment. Superficial channels with a cap and electrodes were configured for dielectrophoresis (DEP) (see e.g., US6576459, US6403367, and all patents and applica tions related thereto) followed by lysis (see e.g, US6287831, US6534295 and all patents and applications related thereto) further along the channel. Both cell separation and cell lysis were observed by confocal microscopy.

## Claims

1. An integrated device for analysis of nucleic acid, said device comprising a support (10; 105), **characterized in that** said support carries a first tank (8; 107) for introducing a biological specimen into said support, said support (10; 105) further carrying at least one pre-treatment channel (17; 110), a buried channel (21; 111), and a detection chamber (24; 113), said buried channel (21; 111) being formed inside a monolithical portion of said support; said first tank (8; 107), pre -treatment channel (17; 110), buried channel (21; 1 11), and detection chamber (24; 113) being in fluid connection with each other.

2. The device according to claim 1, further comprising at least one second tank (9; 108) for introducing a reagent in fluid connection with either the first tank (8; 107) or the pretreatment channel (17; 110) or the buried channel (21; 111 ) and comprising a mixing chamber (20; 121 ).

3. The device according to claim 1 or 2, **characterized by** a detection circuit associated with said detection chamber (24; 113) and formed inside or on sai d support (10; 105).

4. The device according to any of the preceding claims, **characterized in that** said support (10; 105) comprises semiconductor material.

5. The device according to any of the preceding claims, **characterized in that** said support (10; 105) is operably mounted on a printed -circuit board (105).

6. The device according to any one of the preceding claims, **characterized in that** said pre-treatment channel (107; 110) is formed above said support (10; 105) and is delimited laterally by a containment structu re (13; 104) and on top by a protective plate (14; 106), which covers said containment structure (13; 104).

7. The device according to claim 6, wherein said containment structure (13; 104) is of polymeric material.

8. The device according to any one of the prece ding claims, wherein said pre - treatment channel (107; 110) comprises at least one dielectrophoresis cell (25; 119).

9. The device according to claim 6 or 7, **characterized in that** said protective plate (14; 106) comprises a conductive layer.

10. The device according to claim 9, said detection chamber (24; 113) is laterally delimited by said containment structure (13; 104) and is coated by said protective plate (14; 106).

11. The device according to claim 10, wherein said protective plate (14; 106) is of a transparent material.

12. The device according to claim 11, **characterized in that** said protective plate (14; 106) is of conductive glass.

13. The device according to claim 8, wherein said dielectrophoresis cell (25; 119) comprises an electrode grid (27; 120) forming an electro static cage with said protective plate (14; 106).

14. The device according to any of the preceding claims, further comprising a micropump (3; 103).

15. The device according to claim 14, **characterized in that** said micropump (3; 103) is a vacuum pump.

16. The device according to claim 14 or 15, wherein said micropump (3; 103) comprises a second support (33; 127) of semiconductor material accommodating fluid - tight chambers (32; 128) set at a preset pressure and connectable to said detection chamber (24; 113).

17. The device according to claim 16, further comprising a suction channel (26; 115) connecting said detection chamber (24; 113) to said micropump (3; 103).

18. The device according to claim 16 or 17, wherein said fluid -tight chambers (32; 128) are sealed by a diaphragm (35; 130) openable electrically.

19. The device according to claim 18, wherein said diaphragm (35; 130) has a thickness not greater than 1 µm.

20. The device according to claim 18 or 19, wherein said micropump (3; 103) comprises electrical-opening means (37, 38; 133, 134) for opening said diaphragm (35; 130).

21. The device according to claim 20, **characterized in that** said electrical -opening means (37, 38; 133, 134) comprise at least one first electrode (37; 133) and, for each fluid-tight chamber (32; 128), a respective seco nd electrode (38; 134), said diaphragm (35; 130) being arranged between said first electrode (37; 133) and a respective one of said second electrodes (38; 134) near an inlet (36, 131) of each said fluid -tight chamber (32; 128).

22. The device according to clai m 21, further comprising a first voltage source (43), connectable to said first electrode (37) of said micropump (3) and supplying a first voltage (V₁), and a second voltage source (45) selectively connectable to one of said second electrodes (38) of said micropump (3) and supplying a second voltage (V₂).

23. A process for manufacturing an integrated device for nucleic acid analysis, comprising the steps of:
- forming at least one first buried channel (21) inside a body of semiconductor material; and
- forming at least one second channel (17) on top of said body (10), said second channel (17) being at least partially arranged on top of said first channel (21).

24. The process according to claim 23, in which in which said step of forming at least one second channel (17) comprises the steps of:
- depositing a polymeric material layer (13') on top of said body (10); and
- defining said polymeric material layer (13') so as to form a containment structure (13) delimiting said second channel (17).

25. The process according to claim 2 4, comprising, before said step of forming at least one second channel(17), the steps of:
- depositing a heater (28) on top of said body;
- forming, on top of said body, a first base (11) incorporating said heater (28), and a second base (12); and
- depositing electrodes (27) on top of said first base (11) and detectors (30) on top of said second base (12).

26. The process according to claim 25, wherein said step of defining said polymeric material layer (13') comprises forming a chamber (24) around said detectors and in fluid connection with said first channel (21).

27. The process according to claim 26, comprising the steps of:
- functionalizing said detectors (30); and
- closing said chamber (24) with a protective plate (14).

28. The process according to claim 27, wherein sai d protective plate (14) is transparent.

29. The process according to claim 27, wherein said protective plate (14) is conductive.

30. The process of any of claims 23 -29, wherein said semiconductor material comprises silicon.

31. A method of amplification, **characterized by** the steps of pretreating a sample in a pretreatment area formed on a substrate to release a target nucleic acid and amplifying said target nucleic acid in a buried channel inside a monolithical portion of said substrate having high thermal conductivity .

32. The method of claim 31, further comprising detecting an amplified nucleic acid on a detector that is carried by said substrate and is fluidly connected to said buried channel.

33. The method of claim 31 or 32, wherein said pretreatment occurring in a pretreatment channel that is fluidly connected to said buried channel.

34. The method of any of claims 31 to 33, further comprising a second pretreatment of a cell sample to separate target nucleic acid -containing cells from non-target nucleic acid-containing cells in said pretreatment channel.

35. The method of any of claims 31 to 34, wherein said amplification occurs by heating said target nucleic acid using an resistor integrated on said substrate.

36. The method of claim 32, wherein said detecting occurs with an sensor integrated on said substrate.

37. A portable device for analysis of a biological material, said portable device comprising:
- a printed circuit board (105);
- a disposable support (106) having a pretreatment channel (110) and a buried channel (111) formed therein and an inlet port (107, 108) accessible from outside of the disposable support, and a sensor (125) placed thereon;
- said disposable support and said sensor operably coupled to said printed circuit board.

38. The portable device of claim 37, further comprising a heating element on said disposable support and operably coupled to said printed circuit board.

39. The portable device of claim 38, further comprising software and control elements to control said sensor and said heating element.

40. The portable device of claim 39, further comprising a detecting chamber on said disposable support and fluidly connected to said buried channel.

41. The portable device of claim 40, further comprising a micropump integral to said disposable support and fluidly coupled to said buried chan nel.

42. The portable device of claim 41, further comprising a sample injection system for accepting a biological sample and injecting it into said inlet port.

43. The portable device of claim 42, said disposable support further comprising one or more pretreatment channels fluidly coupled with said buried channel.

44. The portable device of claim 43, further comprising a user interface to direct said software and control elements.

45. The portable device of claim 44, wherein said detecting chamber further comprises a CMOS detector.

46. An integrated micro -device for analysis of a raw biological specimen, comprising a support (10; 105), **characterized in that** said support (10; 105) comprises:
- means for introducing and pretreating the raw biological specimen (8; 107);
- a buried channel (21; 111) formed inside a monolithic portion of said support; and
- a detection chamber (24; 113);
wherein the means for introducing and pretreating, the buried channel, and the detection chamber are fluidly coupled and wherein the means for introducing and pretreating is accessible from outside of said support.

47. The integrated micro-device of claim 46 further comprising a micropump on said support for moving a specimen from the means for introducing and pretreating to the buried channel and to the detection chamber.

48. The integrated micro-device of claim 46, further comprising a heater on said support.

49. The integrated micro -device of claim 46, further comprising an electrode on said support.

50. The integrated micro -device of claim 46, further compris ing a tank, fluidly coupled with the buried channel.

51. The integrated micro-device of claim 46, wherein said support comprises a material with high thermal conductivity.

52. The integrated micro-device of claim 46, wherein said support comprises silicon.

53. The integrated micro-device of claim 46, further comprising a heater, an electrode, a micropump for moving a specimen from the means for introducing and pretreating to the buried channel to the detection chamber, wherein said support comprises a material with hi gh thermal conductivity.
